(19) Europäisches Patentamt

European Patent Office

Office européen des brevets

(11) **EP 4 503 691 A1**

(12) **EUROPEAN PATENT APPLICATION**
published in accordance with Art. 153(4) EPC

(43) Date of publication:
**05.02.2025  Bulletin 2025/06**

(21) Application number: **22932750.7**

(22) Date of filing: **25.03.2022**

(51) International Patent Classification (IPC):
**H04W 12/06** (2021.01)      **H04L 9/32** (2006.01)

(52) Cooperative Patent Classification (CPC):
**H04L 9/32; H04W 12/06**

(86) International application number:
**PCT/CN2022/083170**

(87) International publication number:
**WO 2023/178689 (28.09.2023 Gazette 2023/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAN, Lu**
  **Dongguan, Guangdong 523860 (CN)**
• **LIU, Xuefeng**
  **Dongguan, Guangdong 523860 (CN)**
• **ZOU, Jipeng**
  **Dongguan, Guangdong 523860 (CN)**

(74) Representative: **RGTH
Patentanwälte PartGmbB
Neuer Wall 10
20354 Hamburg (DE)**

(54) **SECURITY IMPLEMENTATION METHOD AND APPARATUS, DEVICE, AND NETWORK ELEMENT**

(57)    Embodiments of this application provide a security implementation method and apparatus, a device, and a network element. The method includes: receiving, by a first network element, first information, where the first information includes a device authentication code DAC and/or a service authentication code SAC; and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

First device

First network element

Step 210: Send first information, where the first information includes a device authentication code DAC and/or a service authentication code SAC

Step 220: Receive the first information

FIG. 2

EP 4 503 691 A1

**Description**

**TECHNICAL FIELD**

Embodiments of this application relate to the technical field of mobile communications, and in particular, to a security implementation method and apparatus, a device, and a network element.

**BACKGROUND**

Three major application scenarios of a fifth-generation mobile communication technology (5th Generation Mobile Communication Technology, 5G) include enhanced mobile broadband (eMBB), massive machine type communications (mMTC), and ultra-reliable and low latency communications (uRLLC). With evolution of communications technologies, internet of things applications of terminals such as an industrial wireless sensor, video surveillance, and a wearable device put forward new requirements such as complexity and cost reduction, size reduction, and lower energy consumption for 5G devices. A zero-power communication technology has significant advantages in terms of power consumption, sizes, and costs of devices, thus becoming a hotspot of research.

However, in a case that a calculation capability of a zero-power device or another low-capability device is limited, these devices cannot support a complex security function, and further cannot support a device authentication mechanism of a 3rd Generation Partnership Project (3rd Generation Partnership Project, 3GPP). Based on this, there is no explicit solution for a zero-power device or another low-capability device to perform a security operation so as to ensure data transmission.

**SUMMARY**

Embodiments of this application provide a security implementation method and apparatus, a device, and a network element.

An embodiment of this application provides a security implementation method, including: receiving, by a first network element, first information, where the first information includes a device authentication code (Device Authentication Code, DAC) and/or a service authentication code (Sercice Authentication Code, SAC); and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

Another embodiment of this application provides a security implementation method, including: sending, by a first device, first information, where the first device is associated with at least one second device; the first information includes a DAC and/or an SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information.

An embodiment of this application provides a security implementation apparatus, applied to a first network element and including: a first receiving unit, configured to receive first information, where the first information includes a DAC and/or an SAC; and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

An embodiment of this application provides a security implementation apparatus, applied to a first device, where the first device is associated with at least one second device; and the apparatus includes: a second sending unit, configured to send first information, where the first information includes a DAC and/or an SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information.

An embodiment of this application provides a first network element, including a processor and a memory. The memory is configured to store a computer program, and the processor is configured to invoke and run the computer program stored in the memory, to execute the foregoing security implementation method.

An embodiment of this application provides a first device, including a processor and a memory. The memory is configured to store a computer program, and the processor is configured to invoke and run the computer program stored in the memory, to execute the foregoing security implementation method.

An embodiment of this application provides a chip, configured to implement the foregoing security implementation method.

Specifically, the chip includes a processor, configured to invoke and run a computer program in a memory, to cause a device installed with the chip to execute the foregoing security implementation method.

An embodiment of this application provides a computer-readable storage medium, configured to store a computer program, where the computer program causes a computer to execute the foregoing security implementation method.

An embodiment of this application provides a computer program product, including computer program instructions, where the computer program instructions cause a computer to execute the foregoing security implementation method.

An embodiment of this application provides a computer program, where the computer program, when run by a computer, causes the computer to execute the foregoing security implementation method.

According to the security implementation method provided in the embodiments of this application, a first device may send first information, where the first device is associated with at least one second device; the first information includes a device authentication code DAC and/or a service authentication code SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information. In other words, the second device can implement a security operation through an operation and/or a communication mechanism of the first device, thereby improving data transmission security.

## BRIEF DESCRIPTION OF DRAWINGS

The accompanying drawings described herein are used to provide a further understanding of this application, and constitute a part of this application. Schematic embodiments of this application and descriptions thereof are used to explain this application, and do not constitute an improper limitation on this application. In the accompanying drawings:

FIG. 1 is a schematic diagram of a network architecture of an exemplary communications system according to an embodiment of this application.

FIG. 2 is a first schematic flowchart of a security implementation method according to an embodiment of this application.

FIG. 3 is a second schematic flowchart of a security implementation method according to an embodiment of this application.

FIG. 4 is a third schematic flowchart of a security implementation method according to an embodiment of this application.

FIG. 5 is a fourth schematic flowchart of a security implementation method according to an embodiment of this application.

FIG. 6 is a fifth schematic flowchart of a security implementation method according to an embodiment of this application.

FIG. 7 is a schematic diagram of a structural composition of a security implementation apparatus 700 according to an embodiment of this application.

FIG. 8 is a schematic diagram of a structural composition of a security implementation apparatus 800 according to an embodiment of this application.

FIG. 9 is a schematic structural diagram of a communications device according to an embodiment of this application.

FIG. 10 is a schematic structural diagram of a chip according to an embodiment of this application.

FIG. 11 is a schematic block diagram of a communications system according to an embodiment of this application.

## DESCRIPTION OF EMBODIMENTS

The following describes the technical solutions in embodiments of this application with reference to the accompanying drawings in embodiments of this application. Apparently, the described embodiments are some rather than all of embodiments of this application. Based on embodiments of this application, all other embodiments obtained by a person of ordinary skill in the art without creative efforts fall within the protection scope of this application.

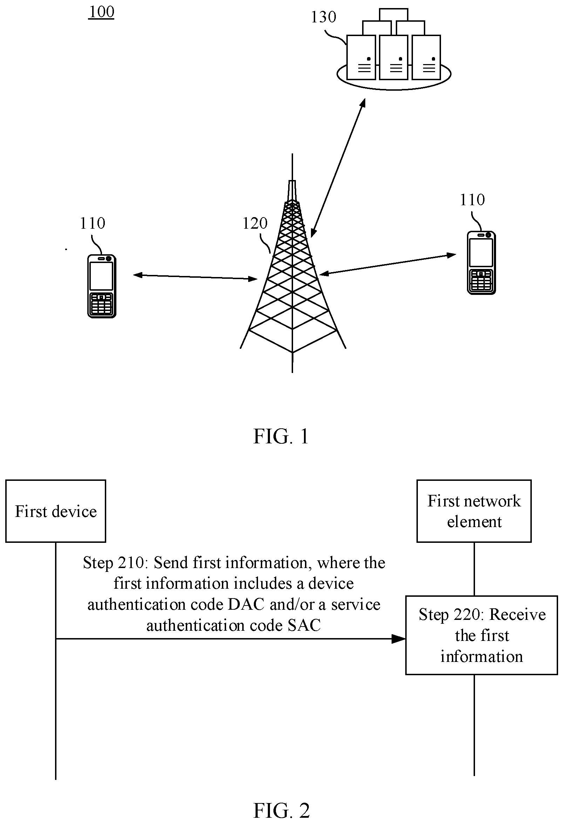

FIG. 1 is a schematic diagram of an application scenario according to an embodiment of this application.

As shown in FIG. 1, a communications system 100 may include a terminal device 110 and a network device 120. The network device 120 may communicate with the terminal device 110 through an air interface. Multi-service transmission is supported between the terminal device 110 and the network device 120.

It should be understood that the communications system 100 is merely used as an example for description in embodiments of this application, but embodiments of this application are not limited thereto. In other words, the technical solutions in embodiments of this application may be applied to various communications systems, for example, a long term evolution (Long Term Evolution, LTE) system, an LTE time division duplex (Time Division Duplex, TDD) system, a universal mobile telecommunication system (Universal Mobile Telecommunication System, UMTS), an internet of things (Internet of Things, IoT) system, a narrow band internet of things (Narrow Band Internet of Things, NB-IoT) system, an enhanced machine-type communications (enhanced Machine-Type Communications, eMTC) system, a 5G communications system (also referred to as a new radio (New Radio, NR) communications system), or a future communications system.

In the communications system 100 as shown in FIG. 1, the network device 120 may be an access network device that communicates with the terminal device 110. The access network device may provide communication coverage for a specific geographical area, and may communicate with the terminal device 110 (for example, UE) located in the coverage area.

The network device 120 may be an evolved NodeB (Evolutional Node B, eNB or eNodeB) in a long term evolution (Long Term Evolution, LTE) system, or a next generation radio access network (Next Generation Radio Access Network, NG RAN) device, or a gNB (gNB) in an NR system, or a wireless controller in a cloud radio access network (Cloud Radio Access Network, CRAN), or the network device 120 may be a relay station, an access point, an in-vehicle device, a wearable device, a hub, a switch, a bridge, a router, a network device in a future evolved public land mobile network (Public Land Mobile Network, PLMN), or the like.

The terminal device 110 may be any terminal device, and includes but is not limited to a terminal device that is connected to the network device 120 or another terminal device through a wired or wireless connection.

For example, the terminal device 110 may be an access terminal, user equipment (User Equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, an IoT device, a satellite handheld terminal, a wireless local loop (Wireless Local Loop, WLL) station, a personal digital assistant (Personal Digital Assistant, PDA), a handheld device with a wireless communication function, a computing device, another processing device connected to a wireless modem, an in-vehicle device, a wearable device, a terminal device in a 5G network, or a terminal device in a future evolved network.

The terminal device 110 may be configured for device to device (Device to Device, D2D) communication.

The wireless communications system 100 may further include a core network device 130 that communicates with a base station. The core network device 130 may be a 5G core network (5G Core, 5GC) device, for example, an access and mobility management function (Access and Mobility Management Function, AMF), for another example, an authentication server function (Authentication Server Function, AUSF), for another example, a user plane function (User Plane Function, UPF), or for another example, a session management function (Session Management Function, SMF). Optionally, the core network device 130 may be alternatively an evolved packet core (Evolved Packet Core, EPC) device of an LTE network, for example, a session management function plus core packet gateway (Session Management Function + Core Packet Gateway, SMF+PGW-C) device. It should be understood that the SMF+PGW-C may implement both a function that can be implemented by an SMF and a function that can be implemented by a PGW-C. In a network evolution process, the foregoing core network device may also be called another name, or a new network entity may be formed by dividing a function of the core network, which is not limited in embodiments of this application.

Communication between function units in the communications system 100 may be further implemented by establishing a connection through a next generation (next generation, NG) interface.

For example, a terminal device establishes an air interface connection to an access network device through an NR interface, to transmit user plane data and control plane signaling. The terminal device may establish a control plane signaling connection to an AMF through an NG interface 1 (N1 for short). The access network device, for example, a next-generation radio access base station (gNB), may establish a user plane data connection to a UPF through an NG interface 3 (N3 for short). The access network device may establish a control plane signaling connection to the AMF through an NG interface 2 (N2 for short). The UPF may establish a control plane signaling connection to an SMF through an NG interface 4 (N4 for short). The UPF may exchange user plane data with a data network through an NG interface 6 (N6 for short). The AMF may establish a control plane signaling connection to the SMF through an NG interface 11 (N11 for short). The SMF may establish a control plane signaling connection to a PCF through an NG interface 7 (N7 for short).

FIG. 1 exemplarily shows one access network device, one core network device, and two terminal devices. Optionally, the wireless communications system 100 may include a plurality of base station devices, and a coverage area of each base station may include another quantity of terminal devices. This is not limited in embodiments of this application.

It should be noted that FIG. 1 is only an example of a system to which this application is applicable. Certainly, the methods shown in embodiments of this application may be further applicable to another system. In addition, the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between associated objects. It should also be understood that, the "indication" mentioned in embodiments of this application may be a direct indication or an indirect indication, or indicate an association relationship. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association relationship between A and B. It should be further understood that the term "corresponding" mentioned in embodiments of this application may mean that there is a direct or indirect correspondence between two elements, or that there is an association relationship between two elements, or that there is a relationship of "indicating" and "being indicated", "configuring" and "being configured", or the like. It should be further understood that the "predefined" or "predefined rule" mentioned in embodiments of this application can be implemented by prestoring a corresponding code or table in a device (for example, including the terminal device and the network device) or in other manners that can be used for indicating related information, and a specific implementation thereof is not limited in this application. For example, pre-defining may refer to being defined in a protocol. It should be further understood that in embodiments of this application, the "protocol" may refer to a standard protocol in the communication field, which may include, for example, an LTE protocol, an NR protocol, and a related protocol applied to a future communications system. This is not limited in this application.

To facilitate understanding of the technical solutions in embodiments of this application, the following describes the technical solutions in this application in detail by specific embodiments. The foregoing related technologies, as optional solutions, may be randomly combined with the technical solutions of embodiments of this application, all of which fall within the protection scope of embodiments of this application. Embodiments of this application include at least a part of the following content.

A zero-power communication technology has significant advantages in terms of power consumption, sizes, and costs of devices. For example, the zero-power communication technology is expected to reduce device power consumed by a narrow band internet of things (Narrow Band Internet of Things, NB-IoT) device from tens of milliwatts to dozens of microwatts or even several microwatts, and reduce device costs from more than ten yuan of the cheapest NB-IoT device to one yuan or less. A main feature of the zero-power communication technology is that backscattering communication is implemented by modulating an incoming signal. In addition, energy may be obtained through energy collection to drive a digital logic circuit or a chip (for example, a micro control unit or a sensor chip) to implement functions such as signal coding, encryption, or simple calculation.

However, in the zero-power communication technology, conversion efficiency of radio frequency energy is usually less than 10%, and therefore a power consumption requirement for driving a digital logic circuit or a chip to calculate cannot be too high. Although the number of times that energy per microjoule can be used for calculation increases with improvement of the process and optimization of the design, complex calculation cannot be met. A calculation function of a zero-power terminal device is very limited, and cannot support a security function defined by SHA-256, and further cannot support an authentication mechanism of 3GPP. Therefore, a lightweight group certificate mechanism needs to be designed for the zero-power device, to authorize uplink data transmission, thereby avoiding malicious triggering for the uplink data transmission of the zero-power device by an attacker or a pseudo-base station, ensuring security of the uplink data transmission of the zero-power device, and improving authorization efficiency of the zero-power device.

Based on this, an embodiment of this application provides a security implementation method. Referring to FIG. 2, the method includes but is not limited to the following steps.

Step 210: A first device sends first information, where the first information may include a device authentication code DAC and/or a service authentication code SAC; and the DAC is used to authenticate an association relationship between the first device and at least one second device, and the SAC is used to authenticate whether the first device and/or the at least one second device support/supports a service type indicated by service identifier information, and/or whether the first device and/or the at least one second device support/supports a data type indicated by data identifier information.

Step 220: A first network element receives the first information.

In this embodiment of this application, the first device may be a device that supports a device authentication mechanism algorithm. For example, the first device may be UE, a base station, or another device that can support a complex operation. This is not limited in this embodiment of this application.

The second device may be a device that has a low operation capability and that does not support a device authentication mechanism algorithm, that is, the second device is a device that cannot separately perform a security operation. For example, the second device may be a zero-power device (Zero Power Device, ZPD), a low-capability device with a relatively weak operation capability, or a device with relatively small remaining power. This is not limited in this embodiment of this application.

The first network element may be a device in a network. For example, the first network element may be an application server or a device ID management server provided by a manufacturer of the at least one second device, an access network device (for example, a base station) or a core network device provided by an operator, or may be a server or a device ID management server provided by a service provider (SP). This is not limited in this embodiment of this application.

Optionally, the second device may communicate with the first device by modulating an incoming signal to implement a backscattering technology.

In this embodiment of this application, the first device may be associated with one or more second devices. It should be understood that the first device is a device that supports a device authentication mechanism, and the at least one second device associated with the first device may implement a security operation by using an operation and/or a communication mechanism of the first device.

Specifically, in this embodiment of this application, the first device may send the first information to the first network element, where the first information carries the DAC and/or the SAC. In this way, the first network element may authenticate, based on the DAC and/or the SAC in the first information, the at least one second device associated with the first device, so as to exchange data with the at least one second device, or the first network element may generate, based on the DAC and/or the SAC, an authorization certificate for the at least one second device, to ensure data transmission security of the second device.

It should be noted that the first information may be directly sent by the first device to the first network element, or may be forwarded by the first device to the first network element by using another intermediate device. This is not limited in this embodiment of this application. For example, when the first network element is an access network device and/or a core network device, the first device may directly send the first information to the first network element. When the first network element is an application server or a device ID management server, the first device may forward the first information to the first network element by using an access network device and/or a core network device provided by an operator.

Optionally, after receiving the first information, the first network element may authenticate, based on the DAC, whether there is a real association relationship between the first device and the at least one second device, to determine whether the at least one second device can be trusted.

Optionally, the first network element may authenticate, based on the SAC, whether a service type supported by the first device and/or the second device is the service type indicated by the service identifier information, to determine whether the first device and/or the at least one second device have/has permission to transmit data corresponding to the service type.

Optionally, the first network element may alternatively authenticate, based on the SAC, whether a data type supported by the first device and/or the second device is the data type indicated by the data identifier information, to determine whether the first device and/or the at least one second device have/has permission to transmit data corresponding to the data type.

In this embodiment of this application, the first device and/or the at least one second device may provide one or more services, such as a positioning service, a speed measurement service, a health emergency service, and an environment monitoring service. In this embodiment of this application, the service identifier information may be used to indicate a service type provided by the first device and/or the at least one second device.

Optionally, the service identifier information may be an ID of a service type, an ID of an application server provided by a manufacturer of the first device and/or the at least one second device, or an ID of an application server provided by a service provider. For example, when the first network element is an application server provided by a service provider (SP), an ID of the first network element is the same as the service identifier information.

In this embodiment of this application, the data identifier information may indicate a data type supported by the first device and/or the at least one second device, and the data type includes one or more types. Generally, a data type supported by a device is generally related to a service supported by the device. For example, if the service is a health emergency service, the data type may include heart rate data, body temperature data, respiration rate data, exercise data, blood pressure data, and the like. If the service is an environment monitoring service, the data type may include location data, wind speed data, temperature data, sunshine data, height data, and the like. This embodiment of this application sets no limitation on the data type.

Optionally, the service identifier information and the data identifier information may be carried by using the first information. The service identifier information and the data identifier information may be alternatively pre-stored by the first network element. This is not limited in this embodiment of this application.

It can be learned that in the security implementation method provided in this embodiment of this application, the first device may serve as an intermediate agent of the second device, and a security operation is implemented for the second device through the operation and/or the communication mechanism of the first device, thereby improving data transmission security.

Optionally, the first information may be certificate request information. In other words, the first information may be used to request an authorization certificate of the at least one second device associated with the first device.

It may be understood that the first device may request, through the operation and/or the communication mechanism of the first device, a network element on a network side for the authorization certificate of the at least one second device associated with the first device.

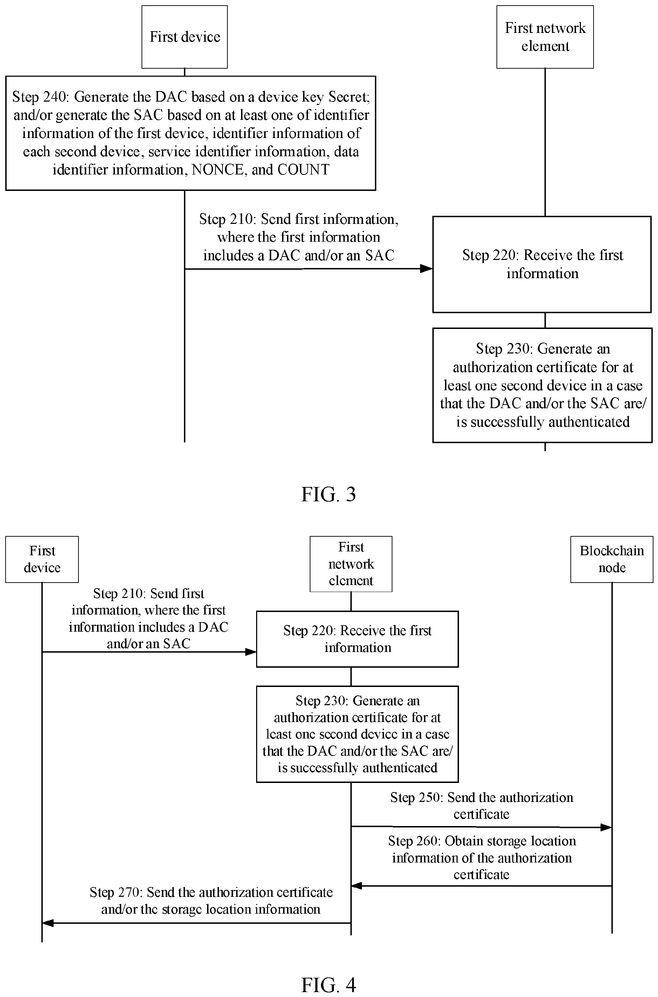

Correspondingly, referring to FIG. 3, the security implementation method provided in this embodiment of this application may further include the following step.

Step 230: The first network element generates an authorization certificate for the at least one second device in a case that the DAC and/or the SAC are/is successfully authenticated by the first network element.

In this embodiment of this application, after receiving the first information, the first network element may determine, by using the DAC, that there is a real association relationship between the first device and the at least one second device, and authenticate, by using the SAC, whether the service type supported by the first device and/or the at least one second device is the service type indicated by the service identifier information, and/or whether the data type supported by the first device and/or the at least one second device is the data type indicated by the data identifier information.

It should be understood that, the first network element generates the authorization certificate for the at least one second device only when the first network element determines that an association relationship between the first device and the at least one second device is correct, and the service type supported by the first device and/or the at least one second device is the service type indicated by the service identifier information, and/or the data type supported by the first device and/or the at least one second device is the data type indicated by the data identifier information.

Optionally, if the first information is forwarded by the first device to the first network element by using an access network device and/or a core network device, a forwarding device (that is, the access network device and/or the core network device) of the first information may authenticate the DAC in the first information. In addition, the forwarding device may send the first information to the first network element based on the service identifier information after successfully authenticating the DAC. Further, the first network element may continue to authenticate the SAC, and generate the authorization certificate of the at least one second device after successfully authenticating the SAC.

In summary, in the security implementation method provided in this embodiment of this application, the first device may serve as an intermediate agent device to implement a security operation for the at least one second device associated with the first device, so as to obtain the authorization certificate of the at least one second device. In other words, the first device interacts with the first network element, so that the first network element generates a lightweight authorization certificate for the at least one second device, and the device obtains service authorization, thereby improving service security and data transmission security.

Optionally, as shown in FIG. 3, in the security implementation method provided in this embodiment of this application, before step 210, the method may further include the following content.

Step 240: The first device generates the device authentication code DAC based on a device key Secret; and/or the first device generates the service authentication code SAC based on at least one of identifier information of the first device, identifier information of each second device, service identifier information, data identifier information, a random number NONCE, or a counter parameter COUNT.

Optionally, the first device may calculate the device authentication code DAC based on the following formula (1):

$$DAC = H(Secret, ID_{UE}, ID_{ZP}, S) \qquad (1),$$

where H() is a hash function, a verification function, or a key generation function. For example, H() may be HMAC-SHA-256, or may be a security function f1, a security function f2, a security function f3, a security function f4, or a security function f5. This is not limited in this embodiment of this application.

$ID_{UE}$ is the identifier information of the first device, and $ID_{ZP}$ is identifier information of the at least one second device. It should be understood that when there are a plurality of second devices, $ID_{ZP}$ may include identifier information of each of the plurality of second devices. S may include at least one of the following: certificate information $Cert_{UE}$ of the first device, the random number NONCE, or the counter parameter COUNT.

Optionally, S may alternatively include one or more of the following information: $ID_{SP}$ or $ID_{DATA}$. $ID_{SP}$ is the service identifier information, and $ID_{DATA}$ is the data identifier information.

Optionally, the device key Secret may be generated based on a service shared key Kservice and/or an initial key of each second device. Herein, the service shared key Kservice is a symmetric key obtained after the first network element performs security negotiation with the first device. The service shared key Kservice may be any one of $K_{eNB}$, $K_{RRCint}$, $K_{RRCenc}$, $K_{NASenc}$, $K_{NASint}$, $K_{AF}$, or $K_{s\_NAF}$. This is not limited in this embodiment of this application.

It should be noted that for a generation manner of the device key Secret in step 240, refer to description of the following embodiment. Details are not described herein.

Optionally, in some embodiments, the first device may sign at least one of identifier information of the first device, identifier information of the at least one second device, service identifier information, data identifier information, NONCE, or COUNT by using a private key of the first device, to obtain the service authentication code SAC.

For example, the first device may generate the service authentication code SAC by using the following formula (2):

$$SAC = Sig_{UE}(S) \qquad (2),$$

where $\text{Sig}_{UE}$ is a process of signing by using a private key of UE. S is an input parameter, and includes at least one or more of the following: $ID_{ZP}$, $ID_{UE}$, $ID_{SP}$, $ID_{DATA}$, NONCE, or COUNT. $ID_{SP}$, $ID_{DATA}$, $ID_{ZP}$, and $ID_{UE}$ herein are described above, and details are not described herein again.

Optionally, in some other embodiments, the first device may perform a security operation on at least one of identifier information of the first device, identifier information of each second device, service identifier information, data identifier information, NONCE, or COUNT based on a service shared key Kservice, to generate the SAC.

For example, the first device may generate the service authentication code SAC by using the following formula (3):

$$SAC = H(Kservice, S) \qquad (3),$$

where S is an input parameter, and may include one or more of the following information: $ID_{ZP}$, $ID_{UE}$, $ID_{SP}$, $ID_{DATA}$, NONCE, or COUNT. $ID_{ZP}$, $ID_{UE}$, $ID_{SP}$, and $ID_{DATA}$ are described above, and details are not described herein again.

Further, the first device sends the DAC and/or the SAC obtained by means of operation to the first network element by using the first information, so that the first network element generates the authorization certificate for the at least one second device associated with the first device.

In this embodiment of this application, the first network element may authenticate the DAC and/or the SAC after receiving the first information. The following describes in detail a process of authenticating the DAC and the SAC by the first network element.

In this embodiment of this application, after receiving the first information, the first network element may authenticate, by using the DAC, whether there is a real association relationship between the first device and the at least one second device, and authenticate, by using the SAC, whether the service type supported by the first device and/or the at least one second device is the service type indicated by the service identifier information, and/or whether the data type supported by the first device and/or the at least one second device is the data type indicated by the data identifier information.

The process of authenticating the DAC by the first network element is as follows:

The first network element may generate first verification information based on a device key Secret. The first network element may generate the first verification information with reference to the foregoing formula (1). If the first verification information is consistent with the DAC carried in the first information, it may be considered that there is a real association relationship between the first device and the at least one second device, and the first device determines that the DAC is successfully authenticated. If the first verification information is inconsistent with the DAC carried in the first information, it is considered that an association relationship between the first device and the at least one second device is incorrect or does not exist, and the first network element determines that the DAC fails to be authenticated.

Optionally, the first network element may obtain the device key Secret from the first device, or may obtain the device key Secret from another trusted device (for example, a base station, a UDM network element, or an application server). The first network element may alternatively generate the device key Secret based on a service shared key and/or an initial key of each second device. A manner in which the first network element generates the device key Secret is the same as a manner in which the first device generates the device key Secret. The manner of determining the device key Secret is not limited in this embodiment of this application.

In addition, the process of authenticating the SAC by the first network element is as follows:

Optionally, in some embodiments, if the SAC is obtained by signing at least one of identifier information of the first device, identifier information of each second device, service identifier information, data identifier information, NONCE, or COUNT by using a private key of the first device, the first network element may authenticate the SAC by using a public key of the first device.

Specifically, the first network element may authenticate the SAC by using the public key of the first device, to obtain second verification information. If the second verification information is consistent with at least one of the identifier information of the first device, the identifier information of the at least one second device, the service identifier information, the data type identifier information, NONCE, or COUNT that are included in the first information, it is considered that the service type supported by the first device and/or the at least one second device is the same as the service type indicated by the service identifier information, and the data type supported by the first device and/or the at least one second device is the data type indicated by the data identifier information, and the first network element determines that the SAC is successfully authenticated; otherwise, determines that the SAC fails to be authenticated.

Optionally, in some other embodiments, if the SAC is obtained by performing a security operation on at least one of identifier information of the first device, identifier information of each second device, service identifier information, data identifier information, NONCE, or COUNT by using a service shared key Kservice, the first network element may authenticate the SAC by using the service shared key Kservice.

Specifically, the first network element may first perform a security operation on at least one of the identifier information of the first device, the identifier information of each second device, the service identifier information, the data identifier information, NONCE, or COUNT based on the service shared key Kservice, to obtain third verification information. The first network element may generate the third verification information with reference to the foregoing formula (3). If the third verification information is consistent with the SAC, the first network element determines that the SAC is successfully authenticated; otherwise, determines that the SAC fails to be authenticated.

Optionally, if the first information is forwarded by the first device to the first network element via an access network device and/or a core network device, a forwarding device (that is, the access network device and/or the core network device) of the first information may also authenticate the DAC in the first information. In addition, the forwarding device may send the first information to the first network element based on the service identifier information after successfully authenticating the DAC. Further, the first network element may continue to authenticate the SAC, and generate the authorization certificate of the at least one second device after successfully authenticating the SAC.

It should be noted that a manner of authenticating the DAC by the access network device and/or the core network device is the same as the manner described above. For brevity, details are not described herein again.

In addition, if the first network element is an access network device and/or a core network device, the DAC and/or the SAC carried in the first information may be directly authenticated.

Optionally, considering that the process of authenticating the DAC and/or the SAC requires a complex security operation, in this embodiment of this application, before the DAC and/or the SAC are/is authenticated, some preliminary authentication may be further performed based on content in the first information, so as to avoid unnecessary DAC and/or SAC authentication.

For example, the first network element may maintain a device list, and the device list stores identifier information of all devices supported by the first network element. When the first information includes the identifier information of the first device and/or the identifier information of the at least one second device, the first network element may determine whether the device list includes the identifier information of the first device and/or the identifier information of the at least one second device in the first information. If the identifier information of the first device and the identifier information of the at least one second device are not in the device list, it may be determined that the first network element does not support data transmission with the first device and/or the second device, and the first network element may not perform a further operation, that is, not perform complex DAC and/or SAC authentication. Otherwise, the first network element needs to continue to perform DAC and/or SAC authentication.

The first network element may further maintain a service type list, and the service type list is used to store a service type supported by the first network element. When the first information includes the service identifier information, the first network element may search the service type list for whether the service type corresponding to the service identifier information is included. If the service type list does not include the service type, it indicates that the first network element does not support the service type. In this way, the first network element may avoid performing DAC and/or SAC authentication.

In addition, the first network element may further maintain a data type list, and the data type list is used to store a data type supported by the first network element. When the first information includes the data identifier information, the first network element may search the data type list for whether the data type corresponding to the data identifier information is included. If the data type list does not include the data type, it indicates that the first network element does not support the data type. In this way, the first network element may avoid performing DAC and/or SAC authentication.

Optionally, information in the device list, the service type list, and the data type list may be obtained by the first network element by invoking information stored in another database device.

In summary, the first network element may determine, based on the DAC and/or the SAC, that the first device has a binding relationship with the at least one second device, that the first device and/or the second device are/is bound to the service type indicated by the service identifier information, or that the first device and/or the second device are/is bound to the data type indicated by the data identifier information. The first network element may generate the authorization certificate for the at least one second device only when at least one of the foregoing binding relationships is established, thereby ensuring security of the generated authorization certificate.

Optionally, in addition to the DAC and/or the SAC, the first information includes at least one of the following: service identifier information; data identifier information; identifier information of the first device; identifier information of each of the at least one second device; a device key Secret; or a first message authentication code MAC corresponding to the first information, where the first MAC is used to authenticate whether a sender of the first information is a valid device.

Optionally, before authenticating the DAC and the/SAC, the first network element may alternatively first perform identity authentication on the first device that sends the first information, and further authenticate the DAC and the/SAC only after the identity authentication on the first device succeeds. Otherwise, if the identity authentication on the first device fails, the first network element may consider that the device that sends the first information is an untrusted device, and does not respond to the first information.

Optionally, in a case that the first information includes the first MAC, the first network element may perform identity authentication on the first device based on the first MAC.

In a possible implementation, if the first MAC is generated by the first device based on a service shared key between the first device and the first network element, the first network element may generate verification information by using the service shared key Kservice, and if the verification information is consistent with the first MAC, determine that the identity authentication on the first device succeeds.

Optionally, the service shared key Kservice negotiated in advance by the first device and the first network element may be a key $K_{eNB}$, $K_{RRCint}$, $K_{RRCenc}$, $K_{NASenc}$, $K_{NASint}$, $K_{AF}$, $K_{s\_NAF}$, or the like. This is not limited in this embodiment of this application.

In another possible implementation, if the first MAC is obtained by the first device by signing other information in the first information by using a private key of the first device, the first network element may authenticate the first MAC by using a public key of the first device, and if an authentication result is consistent with the other information in the first information, determine that the identity authentication on the first device succeeds. In a case that the identity authentication on the first device succeeds, the first network element further authenticates the DAC and/or the SAC to determine whether to generate the authorization certificate for the at least one second device.

In this embodiment of this application, the first network element may generate the authorization certificate for the at least one second device after successfully authenticating the DAC and/or the SAC. The at least one second device may share one authorization certificate.

Optionally, the first network element may generate an RSA accumulator parameter $\alpha_{ZP}$ for each second device before generating the authorization certificate, and the RSA accumulator parameter $\alpha_{ZP}$ of the second device may be used to prove whether the second device is revoked.

Optionally, the authorization certificate generated by the first network element may include at least one of the following information: identifier information of the first device; a public key of the first device; identifier information of each of the at least one second device; an RSA accumulator parameter of each of the at least one second device; identifier information of the first network element; a public key of the first network element; service identifier information; data identifier information; the device authentication code DAC; or a digital signature of the first network element.

The digital signature may be obtained by the first network element by signing other information in the authorization certificate by using a private key of the first network element. It should be understood that the digital signature may be used to authenticate validity of the authorization certificate.

In an example, when there is one second device, an authorization certificate of the second device ZP1 may be $Cert_{IS\to ZP}$ ([$ID_{ZP1}$, DAC], $\alpha_{ZP1}$, $ID_{UE}$, $ID_{IS}$, $ID_{SP}$, $Sig_{skIS}$). IS represents the first network element, and $Cert_{IS\to ZP}$ may be understood as the authorization certificate generated by the first network element for the second device; and $\alpha_{ZP1}$ is an RSA accumulator parameter of the second device ZP1, $ID_{IS}$ is the identifier information of the first network element, skis is the private key of the first network element, and $Sig_{skIS}$ is the digital signature of the first network element.

In another example, when there are n second devices, n is an integer greater than 1, and an authorization certificate of the n second devices may be $Cert_{IS\to ZPg}$ ([$ID_{ZP1}$, ..., $ID_{ZPn}$, DAC], $\alpha_{ZP1}$, ..., $\alpha_{ZPn}$, $ID_{UE}$, $ID_{IS}$, $ID_{SP}$, $Sig_{skIS}$). $\alpha_{ZP1}$, ..., $\alpha_{ZPn}$ are RSA accumulator parameters respectively corresponding to the n second devices.

It should be noted that when the service identifier information $ID_{SP}$ is an ID of an application server and the first network element is the application server, the identifier information $ID_{IS}$ of the first network element is the same as the service identifier information $ID_{SP}$, and the first network element may use only one of the two to generate the authorization certificate.

It should be understood that when there are a plurality of second devices, the first network element may generate one authorization certificate for the plurality of second devices, and the authorization certificate may be a group certificate, that is, the plurality of second devices may share one authorization certificate.

Optionally, referring to a schematic flowchart shown in FIG. 4, in this embodiment of this application, the first network element may further perform step 250 and step 260 after generating the authorization certificate of the at least one second device.

Step 250: The first network element sends the authorization certificate to a blockchain node.

Step 260: The first network element obtains storage location information of the authorization certificate.

It may be understood that the first network element may send the generated authorization certificate of the at least one second device to the blockchain node, and perform a chain operation on the authorization certificate of the at least one second device, to implement distributed storage of the authorization certificate. Further, after receiving the authorization certificate, the blockchain node may store the authorization certificate in a storage block of the blockchain, and feed back the storage location information to the first network element.

Optionally, as shown in FIG. 4, after step 260, the method may further include the following step.

Step 270: The first network element sends the authorization certificate and/or the storage location information to the first device.

It may be understood that, after generating the authorization certificate, the first network element may send the generated authorization certificate to a requesting party of the certificate, that is, the first device. The first network element may also send the storage location information of the authorization certificate in the storage block to the first device, and the first device and/or the at least one second device may request the authorization certificate from the blockchain node based on the storage location information when required.

The following describes in detail a manner of generating the device key Secret in step 240.

In this embodiment of this application, the device key Secret in step 240 may be obtained by the first device by means of calculation based on the service shared key Kservice and/or the initial key corresponding to each second device.

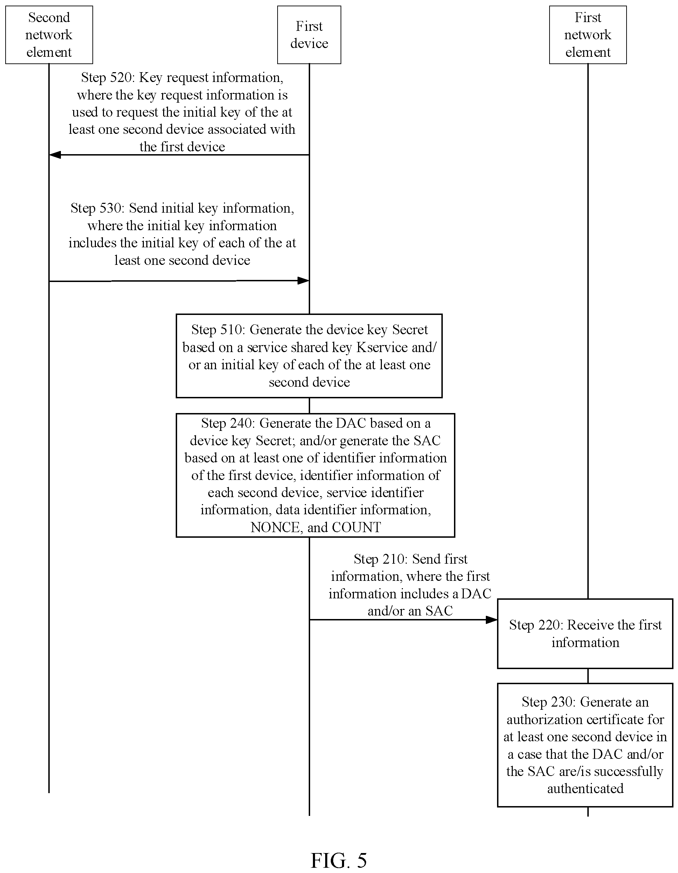

Optionally, as shown in FIG. 5, before step 240, the method may further include the following content.

Step 510: The first device generates the device key Secret based on a service shared key Kservice and/or an initial key of each of the at least one second device.

Optionally, the first device may directly generate the device key Secret based on the initial key corresponding to each second device.

For example, if there is one second device, the device key Secret is an initial key of the second device. If there are a plurality of second devices, the first device may perform aggregation processing on an initial key of each second device to obtain the device key Secret. The aggregation processing may be direct connection processing on a plurality of keys.

Optionally, the first device may alternatively generate the device key Secret based on the initial key of each of the at least one second device and the service shared key Kservice. The service shared key Kservice may be $K_{eNB}$, $K_{RRCint}$, $K_{RRCenc}$, $K_{NASenc}$, $K_{NASint}$, $K_{AF}$, $K_{s\_NAF}$, or the like. This is not limited in this embodiment of this application.

For example, if there is one second device, the first device may perform direct connection processing on an initial key of the second device and the service shared key Kservice to obtain the device key Secret. If there are a plurality of second devices, the first device may perform direct connection processing on an initial key of each second device and the service shared key Kservice to obtain the device key Secret.

Optionally, in step 510, the first device may generate the device key Secret based on the service shared key Kservice and/or the initial key of each of the at least one second device in the following manner: generating, by the first device, an intermediate key of each second device based on the initial key of the second device; and generating, by the first device, the device key Secret based on the service shared key Kservice and/or the intermediate key of each second device.

The intermediate key may be a symmetric key that may be shared between the first device and the second device and that is obtained after the first device and the second device perform security negotiation at a physical layer.

Optionally, the first device may first generate the intermediate key of each second device based on the initial key of the second device. Then, the first device may generate the device key Secret based on the intermediate key of each of the at least one second device.

In other words, the first device may perform negotiation processing with the second device for a security mechanism at a physical layer based on the initial key of each second device, to generate the intermediate key respectively corresponding to each second device. Further, the first device may generate the device key Secret based on the intermediate key of each second device.

For example, if there is one second device, the device key Secret is an intermediate key of the second device. If there are plurality of second devices, the first device may perform aggregation processing on an intermediate key of each second device to obtain the device key Secret. The aggregation processing may be direct connection processing on a plurality of keys.

Optionally, the first device may alternatively first generate the intermediate key of each second device based on the initial key of the second device. Then, the first device may generate the device key Secret based on the service shared key Kservice and the intermediate key of each second device.

For example, if there is one second device, the device key Secret is an intermediate key of the second device. If there are a plurality of second devices, the first device may perform aggregation processing on the service shared key Kservice and an intermediate key of each second device to obtain the device key Secret.

It should be noted that before authenticating the DAC, the first network element may also determine the device key Secret in the foregoing manner. In other words, the first network element may generate the device key Secret based on the service shared key Kservice and/or the initial key of each second device; or the first network element may calculate the intermediate key of each second device based on the initial key of each second device. Further, the first network element generates the device key Secret based on the service shared key Kservice and/or the intermediate key of each second device. A calculation manner is the same as that described in step 510. For brevity, details are not described herein again.

Optionally, as shown in FIG. 5, before step 510, the following steps may be further executed.

Step 520: The first device sends key request information to a second network element, where the key request information is used to request the initial key of the at least one second device associated with the first device.

Step 530: The second network element sends initial key information to the first device, where the initial key information includes the initial key of each of the at least one second device.

The second network element may be a device trusted by the at least one second device, and is configured to manage the initial key of each of the at least one second device. For example, the second network element may be a server or a device ID management server provided by a manufacturer of the second device, or may be an access network device or a core network device provided by an operator, or may be a server or a device ID management server provided by a service provider (SP). This is not limited in this embodiment of this application.

It should be noted that the second network element and the first network element in the foregoing embodiment may be a same device, or may be different devices. This is not limited in this embodiment of this application.

Optionally, the key request information may include at least one of the following information: the identifier information of the first device; the identifier information of each of the at least one second device; the service identifier information; the data identifier information; or a second MAC corresponding to the key request information.

In this embodiment of this application, the second network element may feed back the initial key information to the first device after receiving the key request information, and the initial key information may carry the initial key of the at least one second device. Specifically, the initial key information may include the identifier information of the at least one second device and the initial key corresponding to each second device.

For example, if there is only one second device, the initial key information may include one pair of identifier information - initial key, that is, $(ID_{ZP1}, K_{ZP1})$. If there are a plurality of (for example, n) second devices, the initial key information may include n pairs of identifier information - initial key: $(ID_{ZP1}, K_{ZP1})$, $(ID_{ZP2}, K_{ZP2})$, $(ID_{ZP3}, K_{ZP3})$, ..., $(ID_{ZPn}, K_{ZPn})$. $ID_{ZP1}$ is identifier information of a zero-power device 1, and $K_{ZP1}$ is an initial key of the zero-power device 1. By analogy, $ID_{ZPn}$ is identifier information of a zero-power device n, and $K_{ZPn}$ is an initial key of the zero-power device n.

Optionally, the initial key may be a symmetric key, and an initial key of the second device may be alternatively stored in a local storage space of the second device.

Optionally, when the key request information includes the service identifier information and/or the data identifier information, the second network element may authenticate the at least one second device based on the service identifier information and/or the data identifier information to determine whether the at least one second device has permission to use a service corresponding to the service identifier information and/or the data identifier information. In addition, the second network element sends the initial key information to the first device only after the at least one second device is successfully authenticated.

The second network element may determine whether locally stored service identifier information is consistent with the service identifier information carried in the key request information, and/or whether locally stored data identifier information is consistent with the data identifier information in the key request information. If yes, the second network element determines that the at least one second device is successfully authenticated. In other words, the at least one second device has permission to use the service type corresponding to the service identifier information and/or the data type corresponding to the data identifier information. If no, the second network element determines that the at least one second device fails to be authenticated, and neither or none of the at least one second device has permission to use the service type corresponding to the service identifier information and/or the data type corresponding to the data identifier information.

For example, in a case that the second network element is an application server, and the service identifier information is an ID of the application server, the second network element may compare the ID of the second network element with the service identifier information carried in the key request information. If the two are the same, it is determined that at least one second device is successfully authenticated; otherwise, it is determined that at least one second device fails to be authenticated.

In this embodiment of this application, the key request information may include the second MAC. After receiving the key request information sent by the first device, the second network element may first authenticate an identity of the first device based on the second MAC, to determine whether the first device that sends the key request information is a trusted device.

Optionally, in some embodiments, the first device may perform encryption or integrity protection on the key request information by using a key negotiated in advance with the second network element, to obtain the second MAC. For example, the key negotiated in advance by the first device and the second network element may be a key $K_{eNB}$, $K_{RRCint}$, $K_{RRCenc}$, $K_{NASenc}$, $K_{NASint}$, $K_{AF}$, $K_{s\_NAF}$, or the like. This is not limited in this embodiment of this application.

Correspondingly, after receiving the key request information, the second network element may authenticate the second MAC by using the foregoing key negotiated with the first device. For example, if the second network element is a base station, the second network element may authenticate the second MAC by using $K_{eNB}$ or $K_{RRCint}$. If the second network element is an application server, the second network element may authenticate the second MAC by using $K_{AF}$ or $K_{s\_NAF}$. If the second network element is a core network element, the second network element may authenticate the second MAC by using $K_{NASint}$.

Optionally, in some other embodiments, the first device may sign content or some content of the key request information by using a private key of the first device to obtain the second MAC. Correspondingly, after receiving the key request information, the second network element may authenticate the second MAC by using a certificate of the first device or a public key of the first device.

It should be understood that the second network element sends the initial key information to the first device only after the identity authentication on the first device succeeds.

The following describes this embodiment of this application in detail with reference to a specific application scenario.

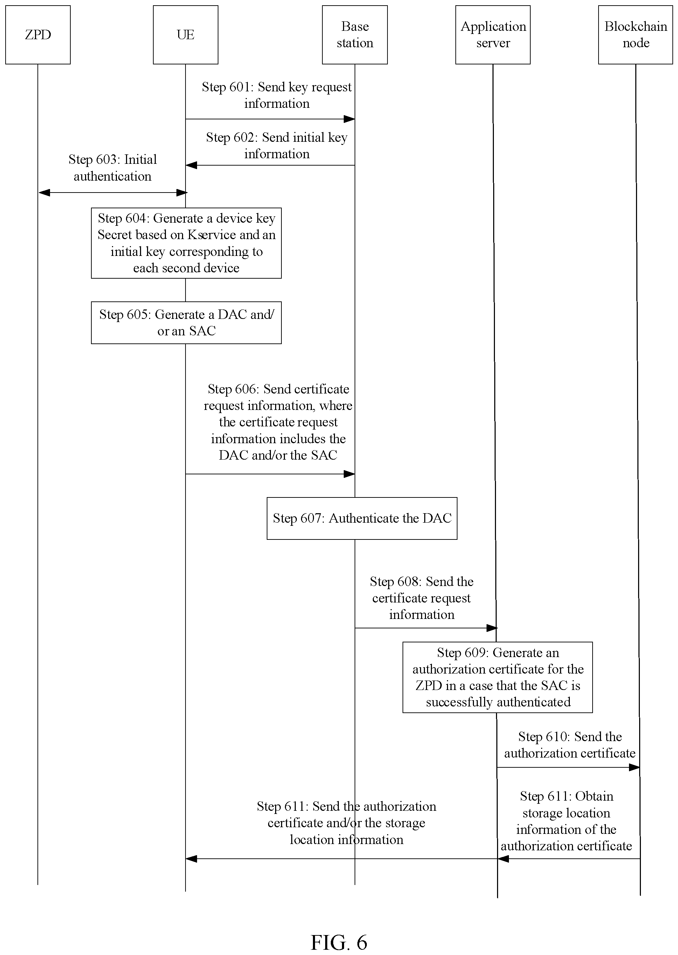

In this application scenario, the first device may be UE, the second device may be a ZPD, the first network element may be an application server provided by a service provider, and the second network element may be a base station. In addition, the first information may be certificate request information. Referring to a schematic flowchart shown in FIG. 6, a security implementation method provided in an embodiment of this application may include the following steps.

Step 601: UE sends key request information to a base station, where the key request information is used to request initial keys of n zero-power devices ZPDs associated with the UE, and n is an integer greater than or equal to 1.

Optionally, the key request information may include at least one of $ID_{UE}$, $\{ID_{ZP1}, ..., ID_{ZPn}\}$, $ID_{SP}$, $ID_{DATA}$, or a first MAC.

$ID_{UE}$ is identifier information of the UE, $ID_{ZP1}$, ..., $ID_{ZPn}$ are identifier information respectively corresponding to the n zero-power devices ZP1 to ZPn bound to the UE. $ID_{SP}$ is service identifier information, and $ID_{DATA}$ is data identifier information.

In addition, the first MAC is a message authentication code of the key request information.

Optionally, the UE may perform encryption or integrity protection on the key request information by using a key $K_{AF}$ or $K_{s\_NAF}$ negotiated with the base station, to obtain the first MAC.

Optionally, the UE may sign content or some content of the key request information by using a private key of the UE, to obtain the first MAC.

Step 602: The base station sends initial key information to the UE, where the initial key information includes the initial keys of the n zero-power devices ZPDs associated with the UE.

If there is only one ZPD (that is, a value of n is 1), the initial key information may include one pair of identifier information - initial key, that is, $(ID_{ZP1}, K_{ZP1})$. If there are a plurality of ZPDs (that is, a value of n is greater than 1), the initial key information may include n pairs of identifier information - initial key: $(ID_{ZP1}, K_{ZP1})$, $(ID_{ZP2}, K_{ZP2})$, $(ID_{ZP3}, K_{ZP3})$, ..., $(ID_{ZPn}, K_{ZPn})$. $ID_{ZP1}$ is identifier information of a zero-power device 1, and $K_{ZP1}$ is an initial key of the zero-power device 1. By analogy, $ID_{ZPn}$ is identifier information of a zero-power device n, and $K_{ZPn}$ is an initial key of the zero-power device n.

Optionally, the initial key may be a symmetric key, and an initial key of the second device may be alternatively stored in a local storage space of the second device.

Optionally, when the key request information includes the service identifier information and/or the data identifier information, the base station may authenticate the n ZPDs based on the service identifier information and/or the data identifier information to determine whether the n ZPDs have permission to use a service corresponding to the service identifier information and/or the data identifier information. In addition, the base station sends the initial key information to the UE only after the n ZPDs are successfully authenticated.

The base station may determine whether locally stored service identifier information is consistent with $ID_{SP}$ carried in the key request information, and/or determine whether locally stored data identifier information is consistent with $ID_{DATA}$ carried in the key request information. If yes, the base station determines that at least one second device is successfully authenticated, and the at least one second device has permission to use the service corresponding to the service identifier information and/or the data identifier information. If no, the base station determines that the at least one second device fails to be authenticated.

Optionally, after receiving the key request information sent by the first device, the base station may first authenticate an identity of the UE, to determine whether the UE that sends the key request information is a trusted device. Further, the base station sends the initial key information to the UE only after the identity authentication on the UE succeeds.

Optionally, the base station may authenticate an identity of the UE based on the first MAC.

In a possible implementation, if the first MAC is generated based on a key $K_{AF}$ or $K_{s\_NAF}$ negotiated by the UE and the base station, the base station may authenticate the first MAC by using the key $K_{AF}$ or $K_{s\_NAF}$.

In another possible implementation, if the first MAC is generated based on a private key of the UE, the base station may authenticate the first MAC by using a certificate of the UE or a public key of the UE.

Step 603: The UE separately performs initial authentication on the n ZPDs.

It should be understood that after determining the initial keys of the n ZPDs, the UE may perform initial authentication on each ZPD based on an initial key of each ZPD, to determine that each other is a trusted device, thereby preventing data leakage and interception.

It should be noted that for an authentication process between the UE and each ZPD, refer to an authentication process in the related art. For brevity, details are not described herein again.

Step 604: The UE generates a device key Secret based on a service shared key Kservice and an initial key corresponding to each ZPD.

Optionally, the UE may directly generate the device key Secret based on the service shared key Kservice and the initial key corresponding to each ZPD.

For example, if there is one ZPD, the device key Secret is a result obtained after Kservice and an initial key of the ZPD are aggregated. If there are a plurality of ZPDs, the UE may perform aggregation processing on Kservice and an initial key of each ZPD to obtain the device key Secret. The aggregation processing may be direct connection processing on a plurality of keys.

Optionally, the UE may perform negotiation processing with the ZPD for a security mechanism at a physical layer based on the initial key of each ZPD, to generate an intermediate key corresponding to each ZPD. Further, the UE may generate the device key Secret based on the service shared key Kservice and the intermediate key of each ZPD.

For example, if there is one ZPD, the device key Secret is a result obtained after the service shared key Kservice and an intermediate key of the ZPD are aggregated. If there are a plurality of ZPDs, the UE may perform aggregation processing on the service shared key Kservice and the intermediate key of each ZPD, to obtain the device key Secret. The aggregation processing may be direct connection processing on a plurality of keys.

Step 605: The UE generates a device authentication code DAC and/or a service authentication code SAC, where the DAC is used to authenticate an association relationship between the UE and the n ZPDs, and the SAC is used to authenticate whether the UE and/or the n ZPDs support/supports a service type indicated by $ID_{SP}$, and/or whether the UE and/or the n ZPDs support/supports a data type indicated by $ID_{DATA}$.

In this embodiment of this application, the UE may generate the device authentication code DAC based on the device key Secret. For example, the UE may calculate the DAC by with reference to the formula (1).

In this embodiment of this application, the UE may generate the service authentication code SAC based on at least one of $ID_{UE}$, $\{ID_{ZP1}, ..., ID_{ZPn}\}$, $ID_{SP}$, $ID_{DATA}$, NONCE, or COUNT.

Optionally, the UE may sign at least one of $ID_{UE}$, $\{ID_{ZP1}, ..., ID_{ZPn}\}$, $ID_{SP}$, $ID_{DATA}$, NONCE, or COUNT by using the private key of the UE, to obtain the SAC. For a specific calculation manner, refer to the formula (2). Details are not described herein again.

Optionally, the UE may perform encryption and integrity protection on at least one of $ID_{UE}$, $\{ID_{ZP1}, ..., ID_{ZPn}\}$, $ID_{SP}$, $ID_{DATA}$, NONCE, or COUNT by using the service shared key Kservice, to obtain the SAC. For a specific calculation manner, refer to the formula (3). Details are not described herein again.

Step 606: The UE sends certificate request information to the base station, where the certificate request information is used to request an authorization certificate of the n ZPDs.

In this embodiment of this application, the certificate request information may include the DAC and/or the SAC, and at least one of $ID_{UE}$, $\{ID_{ZP1}, ..., ID_{ZPn}\}$, $ID_{SP}$, $ID_{DATA}$, or a second MAC.

The second MAC may be obtained by the UE by performing signature processing on all or a part of other information in the certificate request information by using the private key of the UE. The second MAC is used to authenticate whether a sender of the certificate request information is a valid device.

Optionally, the UE may directly send the certificate request information to an application server.

Step 607: The base station authenticates the DAC in the certificate request information.

In this embodiment of this application, the base station may determine, by using the DAC, whether there is a real association relationship between the UE and the n ZPDs.

Specifically, the base station may generate first verification information based on a device key Secret. The base station may generate the first verification information with reference to the foregoing formula (1). If the first verification information is consistent with the DAC in the certificate request information, it may be considered that there is a real association relationship between the UE and the n ZPDs, and the base station determines that the DAC is successfully authenticated. If the first verification information is inconsistent with the DAC, it is considered that an association relationship between the UE and the n ZPDs is incorrect or does not exist, and the base station determines that the DAC fails to be authenticated.

The base station may obtain the device key Secret from the UE, or may obtain the device key Secret from another trusted device (for example, a UDM network element or an application server). The base station may alternatively generate the device key Secret based on a service shared key Kservice and an initial key of each second device. This is not limited in this embodiment of this application.

Step 608: The base station sends the certificate request information to an application server in a case that the DAC is successfully authenticated.

Optionally, after determining that there is a real association relationship between the UE and the n ZPDs, the base station may forward the certificate request information to the application server corresponding to $ID_{SP}$ and/or $ID_{DATA}$.

Step 609: The application server generates an authorization certificate for the n ZPDs in a case that the SAC is successfully authenticated.

It may be understood that after receiving the certificate request information, the application server authenticates, by using the SAC, whether a service type supported by the UE and/or the n ZPDs is the service type indicated by $ID_{SP}$, and/or whether a data type supported by the UE and/or the n ZPDs is the data type indicated by $ID_{DATA}$.

Optionally, if the SAC is obtained by signing at least one of $ID_{UE}$, $\{ID_{ZP1}, ..., ID_{ZPn}\}$, $ID_{SP}$, $ID_{DATA}$, NONCE, or COUNT by using a private key of the UE, the application server may authenticate the SAC by using a public key of the UE.

Specifically, the application server may authenticate the SAC by using the public key of the UE, to obtain second verification information. If the second verification information is consistent with at least one of $ID_{UE}$, $\{ID_{ZP1}, ..., ID_{ZPn}\}$, $ID_{SP}$, $ID_{DATA}$, NONCE, or COUNT carried in the certificate request information, it is determined that the SAC successfully authenticated. Otherwise, it is determined that the SAC fails to be authenticated.

Optionally, in some other embodiments, if the SAC is obtained by performing a security operation on at least one of $ID_{UE}$, $\{ID_{ZP1}, ..., ID_{ZPn}\}$, $ID_{SP}$, $ID_{DATA}$, NONCE, or COUNT by using a service shared key Kservice, the application server may authenticate the SAC by using the service shared key Kservice.

Specifically, the application server may first perform a security operation on at least one of $ID_{UE}$, $\{ID_{ZP1}, ..., ID_{ZPn}\}$, $ID_{SP}$, $ID_{DATA}$, NONCE, or COUNT based on the service shared key Kservice, to obtain third verification information. The application server may generate the third verification information with reference to the foregoing formula (3). If the third verification information is consistent with the SAC, the application server determines that the SAC is successfully authenticated; otherwise, determines that the SAC fails to be authenticated.

In this embodiment of this application, the application server may generate the authorization certificate for the n ZPDs after successfully authenticating the SAC.

Optionally, before generating the authorization certificate, the application server may generate an RSA accumulator parameter $\alpha_{ZP}$ for each ZPD. The RSA accumulator parameter $\alpha_{ZP}$ of each ZPD may be used to prove whether the ZPD is revoked.

Optionally, the authorization certificate may include at least one of $ID_{UE}$, $pk_{uE}$, $\{ID_{ZP1}, ..., ID_{ZPn}\}$, the DAC, $\alpha_{ZP1}, ..., \alpha_{ZPn}$, $ID_{SP}$, $ID_{IS}$, $ID_{DATA}$, or $Sig_{skIS}$.

$pk_{UE}$ is the public key of the UE, $ID_{IS}$ is identifier information of the application server IS, and $Sig_{skIS}$ is obtained by the application server by signing other information in the authorization certificate by using a private key of the application server.

For example, when there is one ZPD, an authorization certificate of the ZPD may be $Cert_{IS->ZP}$ ([$ID_{ZP1}$, DAC], $\alpha_{ZP1}$, $ID_{UE}$, $ID_{IS}$, $ID_{SP}$, $Sig_{skIS}$). When there is more than one ZPD, an authorization certificate of the ZPD may be $Cert_{IS->ZPg}$ ([$ID_{ZP1}, ..., ID_{ZPN}$, DAC], $\alpha_{ZP1}, ..., \alpha_{ZPn}$, $ID_{UE}$, $ID_{IS}$, $ID_{SP}$, $Sig_{skIS}$). $\alpha_{ZP1}, ..., \alpha_{ZPn}$ are RSA accumulator parameters respectively corresponding to the n second devices.

It should be noted that when the service identifier information $ID_{SP}$ is an ID of the application server, and $ID_{SP}$ is the same as IDis, the application server may use only one of the two to generate the authorization certificate.

Step 610: The application server uploads the authorization certificate to a storage block of a blockchain node.

Step 611: The application server obtains storage location information of the authorization certificate, and sends the authorization certificate and/or the storage location information of the authorization certificate to the UE.

In summary, in the security implementation method provided in this embodiment of this application, the UE may serve as an intermediate agent device to implement a security operation for a plurality of zero-power devices associated with the UE, so as to obtain an authorization certificate of the plurality of zero-power devices. In other words, the UE interacts with the application server, so that the application server generates a lightweight group authorization certificate for the plurality of zero-power devices, to authorize uplink data transmission of the zero-power devices, thereby avoiding malicious triggering for the uplink data transmission of the zero-power device by an attacker or a pseudo-base station, ensuring security of the uplink data transmission of the zero-power device, and improving authorization efficiency of the zero-power device.

The foregoing describes in detail the preferred implementations of this application with reference to the accompanying drawings. However, this application is not limited to specific details in the foregoing implementation. Within a technical concept scope of this application, a plurality of simple variations of the technical solutions of this application may be performed, and these simple variations are all within the protection scope of this application. For example, each specific technical feature described in the foregoing specific implementations may be combined in any suitable manner without contradiction. To avoid unnecessary repetition, various possible combination manners are not described otherwise in this application. For another example, any combination may also be performed between different implementations of this application, provided that the combination is not contrary to the idea of this application, the combination shall also be considered as the content disclosed in this application. For another example, without conflict, the technical features in the embodiments and/or the embodiments described in this application may be any combination with the prior art, and the technical solutions obtained after the combination also fall within the protection scope of this application.

It should be further understood that, in the method embodiments of this application, sequence numbers of the foregoing processes do not mean execution sequences. The execution sequences of the processes shall be determined according to functions and internal logic of the processes, and shall not be construed as any limitation on the implementation processes of embodiments of this application. In addition, in embodiments of this application, the terms "downlink", "uplink", and "sidelink" are used to indicate a transmission direction of a signal or data, where "downlink" indicates that a transmission direction of a signal or data is a first direction from a station to user equipment in a cell, "uplink" indicates that a transmission direction of a signal or data is a second direction from user equipment in a cell to a station, and "sidelink" indicates that a transmission direction of a signal or data is a third direction from user equipment 1 to user equipment 2. For example, "downlink signal" indicates that a transmission direction of the signal is a first direction. In addition, in embodiments of this application, the term "and/or" is merely used to describe an association relationship between associated objects, and represents that there may be three relationships. Specifically, A and/or B may represent three cases: only A exists, both A and B exist, and only B exists. In addition, the character "/" in this specification generally indicates an "or" relationship between the associated objects.

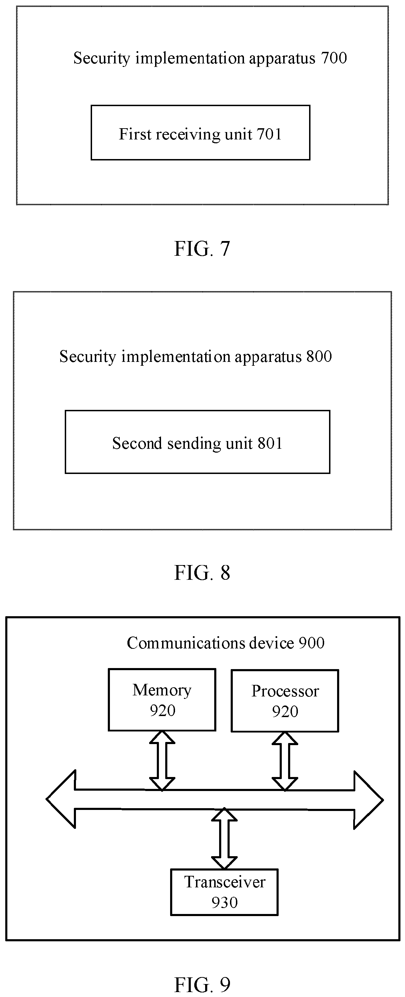

FIG. 7 is a schematic diagram of a structural composition of a security implementation apparatus 700 according to an embodiment of this application, and the apparatus is applied to a first network element. As shown in FIG. 7, the security implementation apparatus 700 includes:

a first receiving unit 701, configured to receive first information, where the first information includes a device authentication code DAC and/or a service authentication code SAC; and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

Optionally, the first information further includes at least one of the following: service identifier information, where the service identifier information is used to indicate a service type supported by the first device and/or the at least one second device; data identifier information, where the service identifier information is used to indicate a data type supported by the first device and/or the at least one second device; identifier information of the first device; identifier information of each of the at least one second device; a device key Secret; or a first message authentication code MAC corresponding to the first information, where the first MAC is used to authenticate whether a sender of the first information is a valid device.

Optionally, the first information is used to request issuance of an authorization certificate for the at least one second device associated with the first device; and the security implementation apparatus 700 further includes: a certificate generation unit, configured to: in a case that the DAC and/or the SAC are/is successfully authenticated, generate the authorization certificate for the at least one second device.

Optionally, the security implementation apparatus 700 further includes an authentication unit, configured to: generate first verification information based on a device key Secret; and if the first verification information is consistent with the DAC, determine that the DAC is successfully authenticated.

Optionally, the authentication unit is further configured to generate the device key Secret based on a service shared key Kservice and/or an initial key of each of the at least one second device, where the service shared key Kservice is shared between the first network element and the first device.

Optionally, the authentication unit is further configured to: calculate an intermediate key of each second device based on the service shared key Kservice and/or the initial key of the second device; and generate the device key Secret based on the service shared key Kservice and/or the intermediate key of each of the at least one second device.

Optionally, the SAC is obtained by signing at least one of identifier information of the first device, identifier information of each second device, service identifier information, data identifier information, a random number NONCE, or a counter parameter COUNT by using a private key of the first device; and correspondingly, the authentication unit is further configured to: authenticate the SAC by using a public key of the first device, to obtain second verification information; and if the second verification information is consistent with the identifier information of the first device, the identifier information of each second device, the service identifier information, the data identifier information, the random number NONCE, and the counter parameter COUNT that are carried in the first information, determine that the SAC is successfully authenticated.

Optionally, the SAC is obtained by performing a security operation on at least one of identifier information of the first device, identifier information of each of the at least one second device, service identifier information, data identifier information, a random number NONCE, or a counter parameter COUNT by using a service shared key Kservice; and correspondingly, the authentication unit is further configured to: perform a security operation on at least one of the identifier information of the first device, the identifier information of each second device, the service identifier information, the data identifier information, the random number NONCE, or the counter parameter COUNT based on the service shared key Kservice, to obtain third verification information; and if the third verification information is consistent with the SAC, determine that the SAC is successfully authenticated.

Optionally, the authorization certificate includes at least one of the following: identifier information of the first device; a public key of the first device; identifier information of each of the at least one second device; an RSA accumulator parameter of each of the at least one second device; identifier information of the first network element; a public key of the first network element; service identifier information; data identifier information; the device authentication code DAC; or a digital signature of the first network element, where the digital signature is obtained by signing other information in the authorization certificate based on a private key of the first network element.

Optionally, the security implementation apparatus 700 further includes a first sending unit, configured to send the authorization certificate to a blockchain node. The first receiving unit 701 is further configured to obtain storage location information of the authorization certificate.

Optionally, the first sending unit is further configured to send the authorization certificate and/or the storage location information to the first device.

FIG. 8 is a schematic diagram of a structural composition of a security implementation apparatus 800 according to an embodiment of this application, and the apparatus is applied to a first device. As shown in FIG. 8, the security implementation apparatus 800 includes: a second sending unit 801, configured to send first information, where the first device is associated with at least one second device; the first information includes a device authentication code DAC and/or a service authentication code SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information.

Optionally, the first information further includes at least one of the following: service identifier information, where the service identifier information is used to indicate a service type supported by the first device and/or the at least one second device; data identifier information, where the service identifier information is used to indicate a data type supported by the first device and/or the at least one second device; identifier information of the first device; identifier information of each of the at least one second device; a device key Secret; or a first message authentication code MAC corresponding to the first information, where the first MAC is used to authenticate whether a sender of the first information is a valid device.

Optionally, the security implementation apparatus 800 further includes a processing unit, configured to: generate the device authentication code DAC based on a device key Secret; and/or generate the service authentication code SAC based on at least one of identifier information of the first device, identifier information of each second device, service identifier information, or data identifier information.

Optionally, the processing unit is further configured to generate the device key Secret based on a service shared key Kservice and/or an initial key of each of the at least one second device, where the service shared key Kservice is shared between the first network element and the first device.

Optionally, the processing unit is further configured to: generate an intermediate key of each second device based on an initial key of the second device; and generate the device key Secret based on the service shared key Kservice and/or the intermediate key of each of the at least one second device.

Optionally, the second sending unit 801 is further configured to send key request information to a second network element, where the key request information is used to request the initial key of the at least one second device associated with the first device.

Optionally, the security implementation apparatus 800 further includes a second receiving unit, configured to receive initial key information sent by the second network element, where the initial key information includes the initial key of each second device.

Optionally, the key request information includes at least one of the following: the identifier information of the first device; the identifier information of each of the at least one second device; the service identifier information; the data identifier information; or a second MAC corresponding to the key request information, where the second MAC is used to authenticate whether a sender of the key request information is a valid device.

Optionally, the processing unit is further configured to sign at least one of the identifier information of the first device, the identifier information of each second device, the service identifier information, the data identifier information, the random number NONCE, or the counter parameter COUNT by using a private key of the first device, to obtain the SAC.

Optionally, the processing unit is further configured to perform a security operation on at least one of the identifier information of the first device, the identifier information of each second device, the service identifier information, the data identifier information, the random number NONCE, or the counter parameter COUNT based on a service shared key Kservice, to generate the SAC.

Optionally, the first information is used to request an authorization certificate of the at least one second device associated with the first device.

A person skilled in the art should understand that the related description of the foregoing security implementation apparatus in embodiments of this application may be understood with reference to the related description of the security implementation method in embodiments of this application.

FIG. 9 is a schematic structural diagram of a communications device 900 according to an embodiment of this application. The communications device may be a first network element, or may be a first device. The communications device 900 shown in FIG. 9 includes a processor 910, and the processor 910 may invoke and run a computer program in a memory, to implement a method in embodiments of this application.

Optionally, as shown in FIG. 9, the communications device 900 may further include a memory 920. The processor 910 may invoke and run a computer program in the memory 920, to implement a method in embodiments of this application.

The memory 920 may be a separate component independent of the processor 910, or may be integrated into the processor 910.

Optionally, as shown in FIG. 9, the communications device 900 may further include a transceiver 930. The processor 910 may control the transceiver 930 to communicate with another device, and specifically, may send information or data to the another device, or receive information or data sent by the another device.

The transceiver 930 may include a transmitter and a receiver. The transceiver 930 may further include an antenna, and there may be one or more antennas.

Optionally, the communications device 900 may be specifically the first network element in embodiments of this application, and the communications device 900 may implement corresponding processes implemented by the first network element in methods in embodiments of this application. For brevity, details are not described herein again.

Optionally, the communications device 900 may be specifically the first device in embodiments of this application, and the communications device 1800 may implement corresponding processes implemented by the first device in methods in embodiments of this application. For brevity, details are not described herein again.

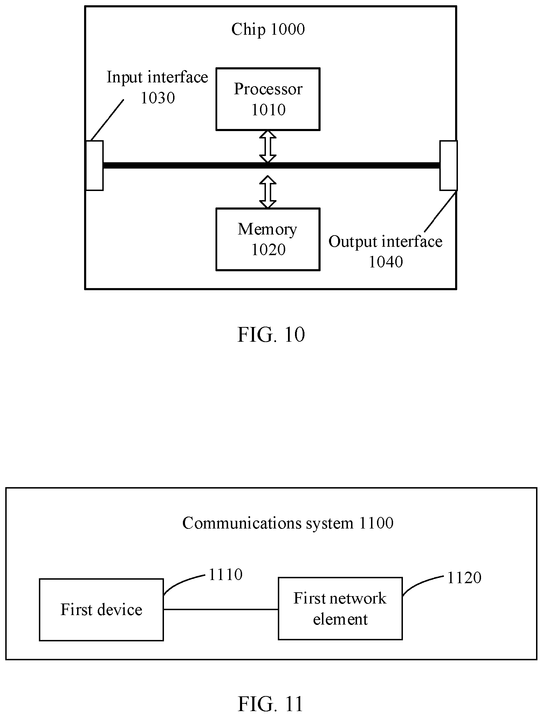

FIG. 10 is a schematic structural diagram of a chip according to an embodiment of this application. The chip 1000 shown in FIG. 10 includes a processor 1010, and the processor 1010 may invoke and run a computer program in a memory, to implement a method in embodiments of this application.

Optionally, as shown in FIG. 10, the chip 1900 may further include a memory 1020. The processor 1010 may invoke and run a computer program in the memory 1020, to implement a method in embodiments of this application.

The memory 1020 may be a separate component independent of the processor 1010, or may be integrated into the processor 100.

Optionally, the chip 1000 may further include an input interface 1030. The processor 1010 may control the input interface 1030 to communicate with another device or chip, and specifically, may obtain information or data sent by the another device or chip.

Optionally, the chip 1000 may further include an output interface 1040. The processor 1010 may control the output interface 1040 to communicate with another device or chip, and specifically, may output information or data to the another device or chip.

Optionally, the chip may be applied to the first network element in embodiments of this application, and the chip may implement corresponding processes implemented by the first network element in methods in embodiments of this application. For brevity, details are not described herein again.

Optionally, the chip may be applied to the first device in embodiments of this application, and the chip may implement corresponding processes implemented by the first device in methods in embodiments of this application. For brevity, details are not described herein again.

It should be understood that the chip mentioned in embodiments of this application may also be referred to as a system-level chip, a system chip, a chip system, or a system-on-chip.

FIG. 11 is a schematic block diagram of a communications system 1100 according to an embodiment of this application. As shown in FIG. 11, the communications system 1100 includes a first device 1110 and a first network element 1120.

The first device 1110 may be configured to implement a corresponding function implemented by the first device in the foregoing method, and the first network element 1120 may be configured to implement a corresponding function implemented by the first network element in the foregoing method. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an applicationspecific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor can implement or perform the methods, steps and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in this embodiment of this application includes but is not limited to these memories and any memory of another proper type.

An embodiment of this application further provides a computer-readable storage medium, configured to store a computer program.

Optionally, the computer-readable storage medium may be applied to the first network element in embodiments of this application, and the computer program causes a computer to execute corresponding processes implemented by the first network element in methods in embodiments of this application. For brevity, details are not described herein again.

Optionally, the computer-readable storage medium may be applied to the first device in embodiments of this application, and the computer program causes a computer to execute corresponding processes implemented by the first device in methods in embodiments of this application. For brevity, details are not described herein again.

An embodiment of this application further provides a computer program product, including computer program instructions.

Optionally, the computer program product may be applied to the first network element in embodiments of this application, and the computer program instructions cause a computer to execute corresponding processes implemented by the first network element in methods in embodiments of this application. For brevity, details are not described herein again.

Optionally, the computer program product may be applied to the first device in embodiments of this application, and the computer program instructions cause a computer to execute corresponding processes implemented by the first device in methods in embodiments of this application. For brevity, details are not described herein again.

An embodiment of this application further provides a computer program.

Optionally, the computer program may be applied to the first network element in embodiments of this application, and the computer program, when run by a computer, causes the computer to execute corresponding processes implemented by the first network element in methods in embodiments of this application. For brevity, details are not described herein again.

Optionally, the computer program may be applied to the first device in embodiments of this application, and the computer program, when run by a computer, causes the computer to execute corresponding processes implemented by the first device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

Those skilled in the art that may clearly understand that, for the purpose of convenient and brief description, for detailed working processes of the foregoing system, apparatus, and unit, reference may be made to a corresponding procedure in the foregoing method embodiments, and details are not described herein again.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such understanding, the technical solutions in embodiments of this application essentially, or the part contributing to the prior art, or some of the technical solutions may be implemented in a form of a software product. The computer software product is stored in a storage medium and includes several instructions for instructing a computer device (which may be a personal computer, a server, a network device, or the like) to execute all or some of the steps of the methods in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

**Claims**

1. A security implementation method, wherein the method comprises:
   receiving, by a first network element, first information, wherein the first information comprises a device authentication code DAC and/or a service authentication code SAC; and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

2. The method according to claim 1, wherein the first information further comprises at least one of the following:

   service identifier information, wherein the service identifier information is used to indicate a service type supported by the first device and/or the at least one second device;
   data identifier information, wherein the service identifier information is used to indicate a data type supported by the first device and/or the at least one second device;
   identifier information of the first device;
   identifier information of each of the at least one second device;
   a device key Secret; or
   a first message authentication code MAC corresponding to the first information, wherein the first MAC is used to authenticate whether a sender of the first information is a valid device.

3. The method according to claim 1 or 2, wherein the first information is used to request issuance of an authorization certificate for the at least one second device associated with the first device; and
   the method further comprises:
   in a case that the DAC and/or the SAC are/is successfully authenticated, generating, by the first network element, the authorization certificate for the at least one second device.

4. The method according to claim 3, further comprising:

   generating, by the first network element, first verification information based on a device key Secret; and
   if the first verification information is consistent with the DAC, determining, by the first network element, that the DAC is successfully authenticated.

5. The method according to claim 4, before the generating, by the first network element, first verification information based on a device key Secret, further comprising:

   generating, by the first network element, the device key Secret based on a service shared key Kservice and/or an initial key of each of the at least one second device,
   wherein the service shared key Kservice is shared between the first network element and the first device.

6. The method according to claim 5, wherein the generating, by the first network element, the device key Secret based on a service shared key Kservice and/or an initial key of each second device comprises:

generating, by the first network element, an intermediate key of each second device based on the initial key of the second device; and
generating, by the first network element, the device key Secret based on the service shared key Kservice and/or the intermediate key of each of the at least one second device.

7. The method according to any one of claims 3 to 6, wherein the SAC is obtained by signing at least one of identifier information of the first device, identifier information of each second device, service identifier information, data identifier information, a random number NONCE, or a counter parameter COUNT based on a private key of the first device; and the method further comprises:

authenticating, by the first network element, the SAC by using a public key of the first device, to obtain second verification information; and
if the second verification information is consistent with the identifier information of the first device, the identifier information of each second device, the service identifier information, the data identifier information, the random number NONCE, and the counter parameter COUNT that are carried in the first information, determining, by the first network element, that the SAC is successfully authenticated.

8. The method according to any one of claims 3 to 6, wherein the SAC is obtained by performing a security operation on at least one of identifier information of the first device, identifier information of each of the at least one second device, service identifier information, data identifier information, a random number NONCE, or a counter parameter COUNT based on a service shared key Kservice; and the method further comprises:

performing, by the first network element, a security operation on at least one of the identifier information of the first device, the identifier information of each second device, the service identifier information, the data identifier information, the random number NONCE, or the counter parameter COUNT based on the service shared key Kservice, to obtain third verification information; and
if the third verification information is consistent with the SAC, determining, by the first network element, that the SAC is successfully authenticated.

9. The method according to any one of claims 3 to 8, wherein the authorization certificate comprises at least one of the following:

identifier information of the first device;
a public key of the first device;
identifier information of each of the at least one second device;
an RSA accumulator parameter of each of the at least one second device;
identifier information of the first network element;
a public key of the first network element;
service identifier information;
data identifier information;
the device authentication code DAC; or
a digital signature of the first network element, wherein the digital signature is obtained by signing other information in the authorization certificate based on a private key of the first network element.

10. The method according to any one of claims 3 to 9, further comprising:

sending, by the first network element, the authorization certificate to a blockchain node; and
obtaining, by the first network element, storage location information of the authorization certificate.

11. The method according to claim 10, further comprising:
sending, by the first network element, the authorization certificate and/or the storage location information to the first device.

12. A security implementation method, wherein the method comprises:

sending, by a first device, first information, wherein the first device is associated with at least one second device; the first information comprises a device authentication code DAC and/or a service authentication code SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information.

13. The method according to claim 12, wherein the first information further comprises at least one of the following:

service identifier information, wherein the service identifier information is used to indicate a service type supported by the first device and/or the at least one second device;
data identifier information, wherein the service identifier information is used to indicate a data type supported by the first device and/or the at least one second device;
identifier information of the first device;
identifier information of each of the at least one second device;
a device key Secret; or
a first message authentication code MAC corresponding to the first information, wherein the first MAC is used to authenticate whether a sender of the first information is a valid device.

14. The method according to claim 12 or 13, before the sending, by a first device, first information, further comprising:

generating, by the first device, the DAC based on a device key Secret;
and/or
generating, by the first device, the SAC based on at least one of identifier information of the first device, identifier information of each second device, service identifier information, data identifier information, a random number NONCE, or a counter parameter COUNT.

15. The method according to claim 14, before the generating, by the first device, the DAC based on a device key Secret, further comprising:

generating, by the first device, the device key Secret based on a service shared key Kservice and/or an initial key of each of the at least one second device,
wherein the service shared key Kservice is shared between the first network element and the first device.

16. The method according to claim 14, wherein the generating, by the first device, the device key Secret based on a service shared key Kservice and/or the identifier information of each of the at least one second device comprises:

generating, by the first device, an intermediate key of each second device based on an initial key of the second device; and
generating, by the first device, the device key Secret based on the service shared key Kservice and/or the intermediate key of each of the at least one second device.

17. The method according to claim 15 or 16, before the generating, by the first device, the device key Secret based on the identifier information of each of the at least one second device, further comprising:
sending, by the first device, key request information to a second network element, wherein the key request information is used to request the initial key of the at least one second device associated with the first device.

18. The method according to claim 17, further comprising:
receiving, by the first device, initial key information sent by the second network element, wherein the initial key information comprises the initial key of each second device.

19. The method according to claim 17 or 18, wherein the key request information comprises at least one of the following:

the identifier information of the first device;
the identifier information of each of the at least one second device;
the service identifier information;
the data identifier information; or
a second MAC corresponding to the key request information, wherein the second MAC is used to authenticate whether a sender of the key request information is a valid device.

20. The method according to any one of claims 14 to 19, wherein the generating, by the first device, the SAC based on at least one of identifier information of the first device, identifier information of each second device, service identifier information, data identifier information, a random number NONCE, or a counter parameter COUNT comprises: signing, by the first device, at least one of the identifier information of the first device, the identifier information of each second device, the service identifier information, the data identifier information, the random number NONCE, or the counter parameter COUNT by using a private key of the first device, to obtain the SAC.

21. The method according to any one of claims 14 to 19, wherein the generating, by the first device, the SAC based on at least one of identifier information of the first device, identifier information of each second device, service identifier information, data identifier information, a random number NONCE, or a counter parameter COUNT comprises: performing, by the first device, a security operation on at least one of the identifier information of the first device, the identifier information of each second device, the service identifier information, the data identifier information, the random number NONCE, or the counter parameter COUNT based on a service shared key Kservice, to generate the SAC.

22. The method according to any one of claims 12 to 21, wherein the first information is used to request an authorization certificate of the at least one second device associated with the first device.

23. A security implementation apparatus, applied to a first network element and comprising: a first receiving unit, configured to receive first information, wherein the first information comprises a device authentication code DAC and/or a service authentication code SAC; and the DAC is used to authenticate an association relationship between a first device and at least one second device, and the SAC is used to authenticate whether the first device and/or the at least one second device support/supports a service type indicated by service identifier information, and/or whether the first device and/or the at least one second device support/supports a data type indicated by data identifier information.

24. A security implementation apparatus, applied to a first device, wherein the first device is associated with at least one second device; and the apparatus comprises: a second sending unit, configured to send first information, wherein the first information comprises a device authentication code DAC and/or a service authentication code SAC; and the DAC is used to authenticate an association relationship between the first device and the at least one second device, and the SAC is used to authenticate whether the first device and/or the at least one second device support/supports a service type indicated by service identifier information, and/or whether the first device and/or the at least one second device support/supports a data type indicated by data identifier information.

25. A first network element, comprising a processor and a memory, wherein the memory is configured to store a computer program, and the processor is configured to invoke and run the computer program stored in the memory, to execute the method according to any one of claims 1 to 11.

26. A first device, comprising a processor and a memory, wherein the memory is configured to store a computer program, and the processor is configured to invoke and run the computer program stored in the memory, to execute the method according to any one of claims 12 to 22.

27. A chip, comprising a processor, configured to invoke and run a computer program in a memory, to cause a device installed with the chip to execute the method according to any one of claims 1 to 11.

28. A chip, comprising a processor, configured to invoke and run a computer program in a memory, to cause a device installed with the chip to execute the method according to any one of claims 12 to 22.

29. A computer-readable storage medium, configured to store a computer program, wherein the computer program causes a computer to execute the method according to any one of claims 1 to 11.

30. A computer-readable storage medium, configured to store a computer program, wherein the computer program causes a computer to execute the method according to any one of claims 12 to 22.

31. A computer program product, comprising computer program instructions, wherein the computer program instructions cause a computer to execute the method according to any one of claims 1 to 11.

32. A computer program product, comprising computer program instructions, wherein the computer program instructions cause a computer to execute the method according to any one of claims 12 to 22.

33. A computer program, wherein the computer program causes a computer to execute the method according to any one of claims 1 to 11.

34. A computer program, wherein the computer program causes a computer to execute the method according to any one of claims 12 to 22.

FIG. 1

FIG. 2

First device

Step 240: Generate the DAC based on a device key Secret; and/or generate the SAC based on at least one of identifier information of the first device, identifier information of each second device, service identifier information, data identifier information, NONCE, and COUNT

First network element

Step 210: Send first information, where the first information includes a DAC and/or an SAC

Step 220: Receive the first information

Step 230: Generate an authorization certificate for at least one second device in a case that the DAC and/or the SAC are/ is successfully authenticated

FIG. 3

First device

First network element

Blockchain node

Step 210: Send first information, where the first information includes a DAC and/or an SAC

Step 220: Receive the first information

Step 230: Generate an authorization certificate for at least one second device in a case that the DAC and/or the SAC are/ is successfully authenticated

Step 250: Send the authorization certificate

Step 260: Obtain storage location information of the authorization certificate

Step 270: Send the authorization certificate and/or the storage location information

FIG. 4

Second network element — First device — First network element

Step 520: Key request information, where the key request information is used to request the initial key of the at least one second device associated with the first device

Step 530: Send initial key information, where the initial key information includes the initial key of each of the at least one second device

Step 510: Generate the device key Secret based on a service shared key Kservice and/ or an initial key of each of the at least one second device

Step 240: Generate the DAC based on a device key Secret; and/or generate the SAC based on at least one of identifier information of the first device, identifier information of each second device, service identifier information, data identifier information, NONCE, and COUNT

Step 210: Send first information, where the first information includes a DAC and/or an SAC

Step 220: Receive the first information

Step 230: Generate an authorization certificate for at least one second device in a case that the DAC and/or the SAC are/is successfully authenticated

FIG. 5

FIG. 6

Security implementation apparatus 700

First receiving unit 701

FIG. 7

Security implementation apparatus 800

Second sending unit 801

FIG. 8

Communications device 900

Memory
920

Processor
920

Transceiver
930

FIG. 9

Chip 1000

Input interface
1030

Processor
1010

Memory
1020

Output interface
1040

FIG. 10

Communications system 1100

First device — 1110

First network
element — 1120

FIG. 11

## INTERNATIONAL SEARCH REPORT

| | International application No. |
|---|---|
| | **PCT/CN2022/083170** |

**A. CLASSIFICATION OF SUBJECT MATTER**

H04W 12/06(2021.01)i; H04L 9/32(2006.01)i

According to International Patent Classification (IPC) or to both national classification and IPC

**B. FIELDS SEARCHED**

Minimum documentation searched (classification system followed by classification symbols)

H04W; H4Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 验证码, 验证, 关联, 业务类型, 数据类型, 服务类型, 授权, DAC, SAC, authenticatio n code, verify, association, data type, service type, authenticate, authorize

**C. DOCUMENTS CONSIDERED TO BE RELEVANT**

| Category* | Citation of document, with indication, where appropriate, of the relevant passages | Relevant to claim No. |
|---|---|---|
| X | US 2019335332 A1 (HUAWEI TECHNOLOGIES CO., LTD.) 31 October 2019 (2019-10-31) description, paragraphs [0138]-[0287], and figures 1-6 | 1-34 |
| A | CN 113407910 A (BEIJING HUAWEI DIGITAL TECHNOLOGY CO., LTD.) 17 September 2021 (2021-09-17) entire document | 1-34 |
| A | CN 101084643 A (EMUE HOLDINGS PTY LTD.) 05 December 2007 (2007-12-05) entire document | 1-34 |
| A | US 2016285633 A1 (YAHOO!, INC.) 29 September 2016 (2016-09-29) entire document | 1-34 |
| A | ERICSSON. "Editorials and Minor Clarifications for Clause 13.2" *3GPP TSG-SA WG3 Meeting #94 S3-190090*, Vol. , No. , 01 February 2019 (2019-02-01), ISSN: , entire document | 1-34 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 October 2022** | **26 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/083170**

| Patent document cited in search report | | | Publication date (day/month/year) | Patent family member(s) | | | Publication date (day/month/year) |
|---|---|---|---|---|---|---|---|
| US | 2019335332 | A1 | 31 October 2019 | WO | 2018126452 | A1 | 12 July 2018 |
| | | | | EP | 3849227 | A1 | 14 July 2021 |
| | | | | CN | 109716810 | A | 03 May 2019 |
| | | | | EP | 3557898 | A1 | 23 October 2019 |
| | | | | WO | 2018126534 | A1 | 12 July 2018 |
| CN | 113407910 | A | 17 September 2021 | | None | | |
| CN | 101084643 | A | 05 December 2007 | CA | 2591968 | A1 | 29 June 2006 |
| | | | | NZ | 550381 | A | 29 April 2011 |
| | | | | WO | 2006066322 | A1 | 29 June 2006 |
| | | | | MX | 2007007511 | A | 08 October 2007 |
| | | | | JP | 2008524727 | A | 10 July 2008 |
| | | | | BR | PI0519184 | A2 | 30 December 2008 |
| | | | | EP | 1829281 | A1 | 05 September 2007 |
| | | | | AU | 2005318933 | A1 | 16 November 2006 |
| | | | | US | 2007088952 | A1 | 19 April 2007 |
| US | 2016285633 | A1 | 29 September 2016 | US | 2018159850 | A1 | 07 June 2018 |
| | | | | US | 2020112559 | A1 | 09 April 2020 |

Form PCT/ISA/210 (patent family annex) (January 2015)